# EUROPÄISCHE PATENTSCHRIFT

(11) **EP 1 777 106 B1**
(45) Veröffentlichungstag und Bekanntmachung des Hinweises auf die Patenterteilung: **03.03.2010**
(21) Anmeldenummer: 06020460.9
(22) Anmeldetag: 28.09.2006
(51) Int. Cl.: B60R 1/00, B60R 11/04

(54) **Kamerasystem für ein Kraftfahrzeug**
Camera system for an automotive vehicle
Système de caméra pour un véhicule automobile

(30) Priorität: 21.10.2005 DE 102005050363
(43) Veröffentlichungstag der Anmeldung: 25.04.2007
(73) Patentinhaber: Bayerische Motoren Werke Aktiengesellschaft, 80809 München (DE)
(72) Erfinder: Schmid, Bernhard, 85737 Ismaning (DE)

(56) Entgegenhaltungen:
- DE-A1- 10 113 134
- DE-A1- 10 160 651
- DE-A1- 19 857 113

## Beschreibung

Die Erfindung betrifft ein Kamerasystem für ein Kraftfahrzeug, umfassend zumindest eine lösbar mit dem Kraftfahrzeug verbindbare Kameraeinheit, welche für zumindest eine kamerabasierte fahrerunterstützende Funktion des Kraftfahrzeugs nutzbar ist.

Ein solches Kamerasystem ist beispielsweise bekannt aus der DE 20 2005 007 509 U1. Die lösbare Verbindung der Kameraeinheit erlaubt eine Nutzung der Kameraeinheit in Zusammenhang mit verschiedenen Kraftfahrzeugen.

Ein Kamerasystem der eingangs genannten Gattung ist ferner bekannt aus der JP 2004235964. Dort ist die Kameraeinheit als Mobiltelefon mit integrierter Kamera ausgebildet. Zusätzlich zur Möglichkeit der Nutzung der Kameraeinheit in Zusammenhang mit verschiedenen Kraftfahrzeugen ergibt sich daraus die Möglichkeit zur Nutzung der Kameraeinheit als Digitalkamera unabhängig von einem Kraftfahrzeug. Zudem besitzt die Kameraeinheit die Eignung zur Ausführung weiterer Funktionen, in diesem Beispiel die Telefonfunktion des Mobiltelefons.

Moderne Kraftfahrzeuge bieten häufig eine Vielzahl von kamerabasierten fahrerunterstützenden Funktionen. Nachteilig an den oben genannten Kamerasystemen ist die Tatsache, dass die Gesamtheit der kamerabasierten fahrerunterstützenden Funktionen moderner Kraftfahrzeuge in der Regel die Aufnahme von Kamerabildern von verschiedenen Aufnahmeorten aus erfordert. Hierzu offenbaren die genannten Schriften keinen Lösungsansatz.

Zudem muss eine an einer kamerabasierten fahrerunterstützenden Funktion beteiligte Kameraeinheit zur Gewährleistung einer hohen Qualität der jeweiligen Funktion meist sehr exakt bzw. zumindest reproduzierbar bezüglich des Kraftfahrzeug anordenbar sein. Dies kann beispielsweise durch eine Aufstellung der aus der JP 2004235964 bekannten Kamerahalterung an wechselnden Orten keineswegs gewährleistet werden.

Aus der DE 101 60 651 A1 ist eine optische Aufnahmeeinrichtung bekannt für ein Kraftfahrzeug mit einer zur Anordnung in dem Kraftfahrzeug vorgesehenen Kamera und mit einer zur Befestigung in dem Kraftfahrzeug vorgesehenen Halterung der Kamera zur Ausrichtung der Kamera in eine vorgesehene Stellung. Verbindungsmittel der Halterung sind dabei mit der Kamera zur werkzeuglosen Montage und Demontage der Kamera ausgebildet.

Das Dokument DE 101 13 134 A1 offenbart ein Kraftfahrzeug mit einer Kameraeinrichtung, die zur Aufzeichnung von Vorgängen und deren Übertragung an einen beispielsweise in einem Fahrgastraum des Kraftfahrzeugs angeordneten Bildschirm dient. Dabei umfasst die Kameraeinrichtung wenigstens eine z. B. in Fahrtrichtung ausgerichtete Kamera, die in einer Aufnahme im Kraftfahrzeug mittels eines Schnellbefestigungsmittels festsetzbar und zumindest von einem Passagier, z. B. einem Fahrer des Kraftfahrzeugs von einem Fahrersitz im Fahrgastraum aus bedienbar ist.

Aufgabe der Erfindung ist es, ein Kamerasystem für ein Kraftfahrzeug zu schaffen, welches die Nutzungsmöglichkeiten einer lösbar mit dem Kraftfahrzeug verbindbaren Kameraeinheit erweitert.

Diese Aufgabe wird erfindungsgemäß gelöst durch ein Kamerasystem mit den Merkmalen des Anspruchs 1.

Bevorzugte bzw. vorteilhafte Ausführungsformen und Weiterbildungen der Erfindung ergeben sich aus den abhängigen Ansprüchen.

Das erfindungsgemäße Kamerasystem umfasst neben zumindest einer lösbar mit dem Kraftfahrzeug verbindbaren Kameraeinheit ferner eine Vielzahl von fest mit dem Kraftfahrzeug verbundenen Kopplungsstationen, an welche die zumindest eine Kameraeinheit wahlweise ankoppelbar ist.

Die Kameraeinheit ist dabei nicht einer Kopplungsstation fest zugeordnet, sondern kann in verschiedenen Kopplungsstationen zum Einsatz kommen. Gemäß der Erfindung umfasst das Kamerasystem Kameraeinheiten unterschiedlichen Typs und der Typ einer Kameraeinheit ist durch eine Kopplungsstation, an welche die Kameraeinheit angekoppelt wird, oder eine übergeordnete Informationsverarbeitungseinheit erkennbar. Die übergeordnete Informationsverarbeitungseinheit kann somit beispielsweise eine fahrerunterstützende Funktion abhängig von der Ankopplung einer Kameraeinheit eines bestimmten Typs aktivieren bzw. parametrieren. Beispielsweise kann eine Nachtsicht-Funktion so ausgeführt sein, dass sie nur dann aktivierbar ist, wenn eine zur Aufnahme von Infrarotlicht geeignete Kamera an eine geeignete Kopplungsstation angekoppelt ist. Die Kopplungsstationen sind vorzugsweise räumlich über das Kraftfahrzeug verteilt angeordnet.

Durch die Erfindung wird die Vielfalt der Nutzungsmöglichkeiten einer lösbar mit dem Kraftfahrzeug verbindbaren Kameraeinheit einerseits dadurch erhöht, dass die Kameraeinheit an verschiedenen über das Kraftfahrzeug verteilten Aufnahmeorten einsetzbar ist. Eine als Rückfahrkamera verwendete Kamera kann somit je nach Belieben des Fahrers ein Bild des rückwärtigen Fahrzeugumfelds aus einer mittigen oder einer seitlichen Perspektive liefern. Andererseits kann die Vielfalt der Nutzungsmöglichkeiten erhöht werden, indem die Kameraeinheit in Zusammenhang mit verschiedenen fahrerunterstützenden Funktionen des Kraftfahrzeugs zum Einsatz kommt. Dieselbe Kameraeinheit kann somit beispielsweise wahlweise als Rückfahrkamera oder als seitliche Randsteinkamera genutzt werden.

Die Beispiele des vorangehenden Absatzes zeigen, dass die Anbringung einer Kameraeinheit an unterschiedlichen Kopplungsstationen die Beteiligung an unterschiedlichen fahrerunterstützenden Funktionen zur Folge haben kann, jedoch nicht notwendigerweise muss.

Vorzugsweise umfasst das Kamerasystem eine Vielzahl von Kameraeinheiten. Die Kameraeinheiten können, wenn sie jeweils an eine Kopplungsstation angekoppelt sind, alle an einer einzigen fahrerunterstützenden Funktion beteiligt sein. Ebenso können die Kameraeinheiten teilweise oder jeweils an unterschiedlichen Funktionen beteiligt sein.

Bevorzugt bietet eine Kopplungsstation einer angekoppelten Kameraeinheit zumindest eine sichere Halterung und sorgt für eine definierte bzw. zumindest reproduzierbare räumliche Anordnung der Kameraeinheit bezüglich des Kraftfahrzeugs. Zur Ankopplung kann an der Kopplungsstation dementsprechend beispielsweise eine Ausnehmung vorgesehen sein, welche als ein Gegenstück zu einem Teil der Kameraeinheit ausgeformt ist. Ebenso kann eine Schnapp- und/oder Klemmverbindung zum Halten der Kameraeinheit vorgesehen sein. Eine solche Kopplungsstation kann darüber hinaus einen Antrieb aufweisen, durch welchen die Kameraeinheit bezüglich des Kraftfahrzeugs verschieb- oder verschwenkbar ist.

In Kraftfahrzeugen mit mehr als einer kamerabasierten fahrerunterstützenden Funktion sind für eine Zuordnung zwischen den Funktionen und einer oder mehreren jeweils an eine Kopplungsstation angekoppelten Kameraeinheiten verschiedene Ansätze denkbar:

Zunächst können die Kopplungsstationen zumindest teilweise jeweils zumindest einer fahrerunterstützenden Funktion des Kraftfahrzeugs zuordenbar sein. Eine an eine solche Kopplungsstation angekoppelte Kameraeinheit wird dann an derjenigen Funktion beteiligt, welcher die Kopplungsstation zugeordnet ist, bzw. dient zu deren Ausführung. Dabei kann entweder eine feste oder eine bevorzugte Zuordnung zwischen den Kopplungsstationen und den Funktionen bestehen. Beispielsweise kann eine Kopplungsstation im rückwärtigen Fahrzeugbereich fest der Funktion "Rückfahrhilfe durch Anzeige des rückwärtigen Fahrzeugumfelds" zugeordnet sein. Eine an eine bestimmte Kopplungsstation angeschlossene Kamera wird dann vorzugsweise automatisch entsprechend in geeigneter Art und Weise für eine der Kopplungsstation zugeordnete Funktion verwendet und/oder konfiguriert. Vorzugsweise ist keinerlei weitere Konfiguration der Kamera erforderlich. Beispielsweise kann eine an eine Kopplungsstation im rückwärtigen Fahrzeugbereich angekoppelte Kameraeinheit dann ohne weitere Konfiguration als Rückfahrkamera dienen. Statt einer festen Zuordnung kann bei anderen Ausführungsformen auch eine bevorzugte Zuordnung zwischen den Kopplungsstationen und den Funktionen bestehen. Aus einer solchen bevorzugten Zuordnung kann sich beispielsweise eine vorläufige automatische funktionsgerechte Konfiguration und/oder Verwendung einer an eine Kopplungsstation angeschlossenen Kameraeinheit ergeben, die jedoch später durch eine nachträgliche Konfiguration und/oder eine Benutzereinstellung korrigierbar ist.

Umgekehrt können mehrere Kameraeinheiten zumindest teilweise jeweils zumindest einer fahrerunterstützenden Funktion des Kraftfahrzeugs zuordenbar sein. Eine solche Kameraeinheit ist dann - unabhängig von der Kopplungsstation, an welche sie angekoppelt ist - immer bzw. bevorzugte an derselben Funktion bzw. denselben Funktionen beteiligt. Dabei kann entweder eine feste oder eine bevorzugte Zuordnung zwischen den Kameraeinheiten und den Funktionen bestehen. Eine bevorzugte Zuordnung kann vorzugsweise dazu dienen, der Kameraeinheit eine vorläufige Funktion zuzuweisen. Eine bevorzugte Zuordnung kann aber beispielsweise durch eine von dieser Zuordnung abweichende Konfiguration und/oder Benutzereinstellung "überstimmt" werden.

Denkbar sind ebenso Mischformen der oben beschriebenen festen oder bevorzugten Zuordnungen. Beispielsweise kann eine bestimmte Kameraeinheit an bestimmten Kopplungsstationen ausschließlich an einer ersten Funktion beteiligt sein. An anderen Kopplungsstationen hingegen ist sie zusätzlich an einer zweiten Funktion beteiligt.

Vorzugsweise ist eine aktuell erfolgende Ankopplung und/oder eine bestehende Ankopplung einer Kameraeinheit an eine Kopplungsstation von der Kopplungsstation, von der Kameraeinheit oder einer übergeordneten Informationsverarbeitungseinheit erkennbar. Eine Erkennung durch die Kopplungsstation oder die Kameraeinheit selbst kann entsprechend an eine übergeordnete Informationsverarbeitungseinheit weitergemeldet werden. Die übergeordnete Informationsverarbeitungseinheit kann somit beispielsweise eine fahrerunterstützende Funktion abhängig von der Ankopplung einer Kameraeinheit an eine bestimmte Kopplungsstation aktivieren bzw. parametrieren. Die Aktivierung bzw. Parametrierung fahrerunterstützender Funktionen des Kraftfahrzeugs kann also von der Anwesenheit von Kameraeinheiten in den Kopplungsstationen abhängen. Ebenso kann die Kameraeinheit selbst abhängig von ihrer Ankopplung an eine Kopplungsstation aktivierbar sein.

Gemäß einer ersten Variante der Erfindung sind Bildsignale der zumindest einen Kameraeinheit drahtlos von der Kameraeinheit an eine Informationsverarbeitungseinheit des Kraftfahrzeugs übertragbar. Die Kopplungsstationen müssen dann keine Anschlussleitungen und elektrischen Kontakte aufweisen. Sie können jedoch Anschlussleitungen und elektrische Kontakte zur Spannungsversorgung einer angekoppelten Kameraeinheit aufweisen.

Gemäß einer zweiten Variante der Erfindung sind die Kopplungsstationen zumindest teilweise drahtlos oder leitungsgebunden mit einer Informationsverarbeitungseinheit des Kraftfahrzeugs verbunden. Die Bildsignale einer angekoppelten können dann über eine Kopplungsstation, an welche die Kameraeinheit angekoppelt ist, an die Informationsverarbeitungseinheit übertragbar sein.

Gemäß einer vorteilhaften Weiterbildung der Erfindung ist die zumindest eine Kameraeinheit als portable Digitalkamera nutzbar. Die Verwendungsvielfalt der Kamera wird somit weiter erhöht.

Ist die zumindest eine Kameraeinheit jedoch nicht als portable Digitalkamera verwendbar, kann sie besonders klein, leicht und kostengünstig hergestellt werden, da unter anderem auf die an portablen Digitalkameras üblichen Anzeige- und Bedienelemente verzichtet werden kann.

Eine Kameraeinheit im Sinne der Erfindung muss nicht notwendigerweise auf die Bildaufnahme als wesentliche Eignung beschränkt sein. Sie kann beispielsweise auch als Mobiltelefon ausgebildet sein und somit zusätzlich die typischen Funktionalitäten eines Mobiltelefons bieten.

Eine Kameraeinheit im Sinne der Erfindung kann vorzugsweise geeignet ausgebildet sein, um in verschiedenen Kraftfahrzeugen zum Einsatz zu kommen. Sie kann als so genanntes Gleichteil in hoher Stückzahl gefertigt sein. Ein Kraftfahrzeughersteller bzw. ein Zubehörlieferant kann solche Kameraeinheiten, ggf. in Verbindung mit geeigneter Software, einzeln oder paketweise zum Kauf anbieten.

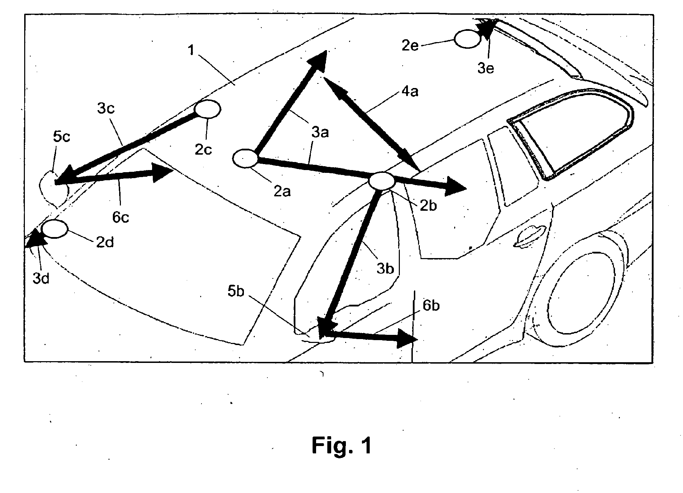

Anhand eines Ausführungsbeispiels wird die Erfindung im Folgenden näher erläutert. Zur Veranschaulichung dient dabei die einzige beigefügte Zeichnung. Dabei zeigt schematisch
- Fig. 1: die Verteilung der Kopplungsstationen und die Ausrichtungen der angekoppelten Kameraeinheiten bei einer bevorzugten Ausführungsform eines erfindungsgemäßen Kamerasystems.

Eine bevorzugte Ausführungsform eines erfindungsgemäßen Kamerasystems für ein Kraftfahrzeug 1 umfasst eine Vielzahl von Kopplungsstationen 2a, 2b, 2c, 2d, 2e. Die Verteilung der Kopplungsstationen ist in Fig. 1 dargestellt.

Sämtliche Kopplungsstationen 2a, 2b, 2c, 2d, 2e sind mit einer nicht eigens grafisch dargestellten zentralen Informationsverarbeitungseinheit des Kraftfahrzeugs 1 verbunden. Die zentrale Informationsverarbeitungseinheit dient der Steuerung einer Vielzahl von kamerabasierten Fahrerassistenzfunktionen. Sie verfügt über mehrere angeschlossene Anzeigeeinheiten. Auch diese sind in Fig. 1 nicht eigens grafisch dargestellt.

An jede Kopplungsstation 2a, 2b, 2c, 2d, 2e kann jeweils eine Kamera angeschlossen werden. Die Kamera wird zum Anschluss in eine Halterung der jeweiligen Kopplungsstation eingeklipst. Eine in eine solche Halterung eingeklipste Kamera kann problemlos manuell wieder aus der Halterung entnommen werden.

Die Position und Ausrichtung einer in eine Halterung eingeklipsten Kamera bezüglich des Kraftfahrzeugs ist durch die jeweilige Halterung definiert. Die Ausrichtungen ggf. angekoppelter Kameraeinheiten bei einer bevorzugten Ausführungsform eines erfindungsgemäßen Kamerasystems sind in Fig. 1 durch die Pfeile 3a, 3b, 3c, 3d, 3e dargestellt. Der Doppelpfeil 4a in Fig. 1 verdeutlicht, dass die Ausrichtung 3a einer in die Kopplungsstation 2a eingeklipsten Kamera manuell variierbar ist.

Die Kopplungsstationen 2a, 2b, 2c, 2d, 2e sind herstellerseitig an dem Kraftfahrzeug 1 vorgesehen. Geeignete Kameras können vom Bediener einzeln oder paketweise erworben und angekoppelt werden, um verschiedene Funktionen des Kraftfahrzeugs 1 nutzbar zu machen. Die Kameras besitzen eine zum Einklipsen in die Halterungen der Kopplungsstationen geeignete Form und eine standardisierte Datenschnittstelle, im vorliegenden Fall USB 2.0.

Verwendbar sind Kameras verschiedener Typen. Die Kameras können beispielsweise unterschiedliche feste Öffnungswinkel oder einen konfigurierbaren Öffnungswinkel besitzen. Sie können zur Aufnahme von sichtbarem Licht und/oder Infrarotlicht geeignet sein. Sie können auch unterschiedlich ausgestattet sein. Beispielsweise kann eine Kamera mit Bedienelementen und einem Bildspeicher ausgestattet sein, sodass sie außerhalb des Kraftfahrzeugs als Digitalkamera verwendbar ist. Der Bildspeicher kann entweder beim nächsten Anschluss an eine Kopplungsstation durch die zentrale Informationsverarbeitungseinheit des Kraftfahrzeugs 1 ausgelesen werden oder durch einen herkömmlichen Personal Computer.

Die wesentlichen Eigenschaften einer angeschlossenen Kamera werden beim Anschluss der Kamera an eine der Kopplungsstationen zu der zentralen Informationsverarbeitungseinheit des Kraftfahrzeugs 1 übertragen. Zudem wird eine Kennung der jeweiligen Kopplungsstation zu der zentralen Informationsverarbeitungseinheit übertragen. Die zentrale Informationsverarbeitungseinheit ist somit jederzeit informiert, welche Kameras an welchen Kopplungsstationen angekoppelt sind, d. h. welche Konfiguration des Kamerasystems vorliegt.

In der zentralen Informationsverarbeitungseinheit ist eine Logik hinterlegt, gemäß welcher verschiedene Fahrerassistenzfunktionen des Kraftfahrzeugs 1 in Abhängigkeit von der Konfiguration des Kamerasystems aktivierbar bzw. parametrierbar sind.

Über die Verbindung der Kopplungsstationen 2a, 2b, 2c, 2d, 2e mit der zentralen Informationsverarbeitungseinheit sind auch Konfigurationsanweisungen von der zentralen Informationsverarbeitungseinheit an die ggf. angeschlossenen Kameras übertragbar, sofern diese konfigurierbar bzw. parametrierbar sind. Ebenso können die Kameras auf diese Weise aktiviert bzw. deaktiviert werden. Es kann auch die Aufnahme von Standbildern getriggert werden.

Aufgenommene Bilddaten der ggf. angeschlossenen Kameras - dabei kann es sich um Einzelbilder und/oder Bildströme handeln - werden über die Verbindung der Kopplungsstationen mit der zentralen Informationsverarbeitungseinheit zur zentralen Informationsverarbeitungseinheit übertragen und dort für die aktivierten Fahrerassistenzfunktionen verwertet. Das hierzu erforderliche Speichern und Auslesen der Daten kann auf Basis geeigneter, aus dem Stand der Technik bekannter Technologien erfolgen.

Im vorliegenden Beispiel sind bei ausreichender bzw. geeigneter Bestückung der Kopplungsstationen mit Kameras im Wesentlichen die folgenden kamerabasierten Fahrerassistenzfunktionen verfügbar:

### Frontkamera (Kopplungsstation 2d, Ausrichtung 3d):

Eine ggf. angekoppelte Kameraeinheit ist in Fahrtrichtung des Kraftfahrzeugs 1 orientiert. Im Falle einer in Fig. 1 abgebildeten Anordnung der Kopplungsstation 2d am unteren Ende der Beifahrer-A-Säulenverkleidung und einer Ausgabe des aufgenommenen Bildstroms auf einem von dem Fahrer einsehbaren Ausgabemonitor kann der Fahrer mittels einer in die Kopplungsstation 2d eingeklipsten Kamera an einem vorausfahrenden Fahrzeug aus äußerster Beifahrer-Position in der Blickrichtung 3d "vorbeisehen" und kann Hindernisse und Gefahren somit besser erkennen als ausschließlich aus seinem eigenen Blickwinkel. Zudem können Bilddaten einer an die Kopplungsstation 2d angekoppelten Kamera in einem Unfalldatenspeicher der zentralen Informationsverarbeitungseinheit im First-In-First-Out-Prinzip mit wählbarer Aufzeichnungslänge vorgehalten werden. Weiters können Fahrten als Video aufgezeichnet werden. Die zur zentralen Informationsverarbeitungseinheit übertragenen Bilddaten können zudem in Kombination mit einer Objekterkennungsverfahren verwertet werden.

### Randsteinkamera (Kopplungsstationen 2b und 2c, Ausrichtungen 3b und 3c):

Die Kopplungsstationen 2b und 2c sind derart an der B-Säule oder dem Dachhimmel angeordnet und derart ausgerichtet, dass ggf. angeschlossene Kameras in im Wesentlichen zur Fahrzeugfront weisender, jedoch nach unten abgesenkter Blickrichtung 3b bzw. 3c orientiert sind. Es können wahlweise beide oder nur eine der Kopplungsstationen 2b und 2c mit Kameras bestückt werden. Die Bilddaten einer oder zweier ggf. in die beiden Kopplungsstationen 2b und 2c eingeklipster Kameras werden dem Fahrer mittels einer Anzeigeeinheit angezeigt. Mittels der Außenspiegel 5b und 5c wird die Blickrichtung der Kameras zumindest ausschnittsweise in die Blickrichtungen 6b bzw. 6c umgelenkt. Während der Fahrt und beim Rangieren wird dem Fahrer somit ein Umgebungsbild wie aus einem abgesenkten Beifahrer-Außenspiegel zugänglich. Die Außenspiegel 5b und 5c bleiben unterdessen für den Fahrer in ihrer regulären Position voll in herkömmlicher Art und Weise nutzbar.

### Fondkamera (Kopplungsstation 2a, Ausrichtung 3a):

Die Kopplungsstation 2a ist im Fahrzeuginneren am Dachhimmel bzw. der Himmelkonsole angeordnet. Eine ggf. an die Kopplungsstation 2a angekoppelte Kamera ist in rückwärtiger, gesenkter Blickrichtung 3a manuell ausrichtbar. Der Doppelpfeil 4a in Fig. 1 verdeutlicht, dass die Ausrichtung 3a einer in die Kopplungsstation 2a eingeklipsten Kamera manuell variierbar ist. Mittels einer ggf. an die Kopplungsstation 2a angekoppelten Kamera und einer Anzeige des Kamerabilds für den Fahrer kann beispielsweise eine Kontrolle von Personen oder Tieren auf der Rücksitzbank erreicht werden, ohne dass der Fahrer hierfür seinen Blick wenden muss. Ebenso kann eine ggf. an die Kopplungsstation 2a angekoppelte Kamera als Webkamera für Fondpassagiere dienen.

### Rückblickkamera (Kopplungsstation 2e, Ausrichtung 3e):

Die Kopplungsstation 2e ist nahe der Heckscheibe am Dachhimmel angeordnet. Eine ggf. an die Kopplungsstation 2e angekoppelte Kamera ist in rückwärtiger Blickrichtung 3e orientiert. Mittels einer solchen Rückblickkamera bzw. Rückfahrkamera kann ein herkömmlicher Rückspiegel ersetzt bzw. ergänzt werden. Dies kann insbesondere bei abgedunkelten Scheiben, hochgefahrenem Sonnenschutzrollo oder bei voller Ausnutzung des Gepäckraumes bei Kombinationsfahrzeugen vorteilhaft sein. Auch eine solche Rückblickkamera bzw. Rückfahrkamera kann Daten für einen Unfalldatenspeicher und/oder für eine Video-Aufzeichnung von Fahrten bereitstellen.

Das Ausführungsbeispiel zeigt, dass die Erfindung dem Fahrer neben deutlich erweiterten Sichtmöglichkeiten beim Bewegen des Automobils auch vielfältige Komfort- und Dokumentationsfunktionen bietet. Der große Vorteil der Erfindung liegt darin, dass der Nutzer des Kraftfahrzeugs das Kraftfahrzeug nicht notwendigerweise mit einer Vielzahl von teuren Kameras bestücken muss. Er kann sich auf diejenigen Funktionen beschränken, die seinen Vorlieben und seinem Bedarf entsprechen. Ebenso kann er mittels nur einer einzigen oder wenigen Kameras verschiedene Funktionen wahlweise nutzen, indem er die Kameras an wechselnde Kopplungsstationen ankoppelt.

Der Benutzer eines Kraftfahrzeugs wird durch die Erfindung in die Lage versetzt, nach seinen persönlichen Anforderungen ein variables Netzwerk von Kameras aufzubauen und dieses gegebenenfalls auch nachträglich zu verändern. Vorzugsweise werden Veränderungen der aktuellen Bestückung der Kopplungsstationen mit Kameras von einer zentralen Informationsverarbeitungseinheit erkannt und es wird als Reaktion auf eine solche Veränderung eine vollständige oder teilweise automatische Neukonfiguration des Netzwerks vorgenommen. Diese Neukonfiguration kann beispielsweise die Zuordnung von Kameras bzw. Kopplungsstationen zu bestimmten Funktionen des Kraftfahrzeugs betreffen. Durch eine solche Neukonfiguration können Parameter der Funktionen und/oder verstellbare Parameter der Kameras (z.B. verstellbarer Zoomfaktor und/oder verstellbare Brennweite) verändert werden. Es kann auch der Fahrer des Kraftfahrzeugs aufgefordert werden, eine vollständige oder teilweise Neukonfiguration zu veranlassen oder durchzuführen.

Für einen Kraftfahrzeughersteller bietet die Erfindung den Vorteil, dass eine einheitliche Software für eine Vielzahl von Systemkonfigurationen bereitgestellt werden kann. Dies ist möglich, da eine Vielzahl von kamerabasierten fahrerunterstützenden Funktionen auf dem gemeinsamen Prinzip Bildaufnahme-Bildverarbeitung-Informationsausgabe basieren. Wesentliche Unterschiede bestehen häufig lediglich innerhalb der Software zwischen Bildaufnahme und Informationsausgabe. Im beschriebenen Ausführungsbeispiel sorgt der Kunde gewissermaßen selbstständig für die Aktivierung bzw. Freischaltung bestimmter kamerabasierter Funktionen. Ggf. kann an den Kunden gemeinsam mit einer ankoppelbaren Kamera ein Datenträger mit einem Programm zur Anpassung bzw. Erweiterung der Software-Konfiguration des Kraftfahrzeugs ausgegeben werden. Ebenso kann eine solche Anpassung bzw. Erweiterung der Software-Konfiguration des Kraftfahrzeugs im Fachbetrieb oder andernorts über eine drahtlose Verbindung vorgenommen werden.

## Patentansprüche

1. Kamerasystem für ein Kraftfahrzeug (1), umfassend zumindest eine lösbar mit dem Kraftfahrzeug verbindbare Kameraeinheit, welche für zumindest eine kamerabasierte fahrerunterstützende Funktion des Kraftfahrzeugs nutzbar ist, sowie eine Vielzahl von fest mit dem Kraftfahrzeug verbundenen Kopplungsstationen (2a, 2b, 2c, 2d, 2e), an welche die zumindest eine Kameraeinheit wahlweise ankoppelbar ist,
**dadurch gekennzeichnet,**
**dass** das Kamerasystem Kameraeinheiten unterschiedlichen Typs umfasst und dass der Typ einer Kameraeinheit durch eine Kopplungsstation, an welche die Kameraeinheit angekoppelt wird, oder eine übergeordnete Informationsverarbeitungseinheit erkennbar ist.

2. Kamerasystem nach Anspruch 1, **dadurch gekennzeichnet, dass** die Kopplungsstationen räumlich über das Kraftfahrzeug verteilt angeordnet sind.

3. Kamerasystem nach einem der Ansprüche 1 oder 2, **dadurch gekennzeichnet,**
**dass** die Kopplungsstationen zumindest teilweise jeweils zumindest einer fahrerunterstützenden Funktion des Kraftfahrzeugs zuordenbar sind.

4. Kamerasystem nach einem der Ansprüche 1 bis 3, **dadurch gekennzeichnet, dass** das Kamerasystem eine Vielzahl von Kameraeinheiten umfasst.

5. Kamerasystem nach Anspruch 4, **dadurch gekennzeichnet, dass** die Kameraeinheiten zumindest teilweise jeweils zumindest einer fahrerunterstützenden Funktion des Kraftfahrzeugs zuordenbar sind.

6. Kamerasystem nach einem der Ansprüche 1 bis 5, **dadurch gekennzeichnet, dass** die Aktivierung bzw. Parametrierung fahrerunterstützender Funktionen des Kraftfahrzeugs von der Anwesenheit von Kameraeinheiten in den Kopplungsstationen abhängig ist.

7. Kamerasystem nach einem der Ansprüche 1 bis 6, **dadurch gekennzeichnet, dass** Bildsignale der zumindest einen Kameraeinheit drahtlos von der Kameraeinheit an eine Informationsverarbeitungseinheit des Kraftfahrzeugs übertragbar sind.

8. Kamerasystem nach einem der Ansprüche 1 bis 7, **dadurch gekennzeichnet, dass** die Kopplungsstationen zumindest teilweise drahtlos oder leitungsgebunden mit einer Informationsverarbeitungseinheit des Kraftfahrzeugs verbunden sind und
dass Bildsignale der zumindest einen Kameraeinheit über eine Kopplungsstation, an welche die Kameraeinheit angekoppelt ist, an die Informationsverarbeitungseinheit übertragbar sind.

9. Kamerasystem nach einem der Ansprüche 1 bis 8, **dadurch gekennzeichnet, dass** die zumindest eine Kameraeinheit als portable Digitalkamera nutzbar ist.

## Claims

1. A camera system for a motor vehicle (1), comprising at least one camera unit which can be detachably connected to the motor vehicle and is useful for at least one camera-based driver-assisting function of the motor vehicle, as well as a large number of coupling stations (2a, 2b, 2c, 2d, 2e) rigidly connected to the motor vehicle, to which coupling stations the at least one camera unit can be selectively coupled, **characterised in that** the camera system comprises camera units of a different type and **in that** the type of a camera unit can be identified by a coupling station, to which the camera unit is coupled, or a superordinate information processing unit.

2. A camera system according to claim 1, **characterised in that** the coupling stations are arranged spatially distributed over the motor vehicle.

3. A camera system according to either of claims 1 or 2, **characterised in that** the coupling stations can be at least partially assigned, in each case, to at least one driver-assisting function of the motor vehicle.

4. A camera system according to any one of claims 1 to 3, **characterised in that** the camera system comprises a large number of camera units.

5. A camera system according to claim 4, **characterised in that** the camera units can be at least partially assigned, in each case, to at least one driver-assisting function of the motor vehicle.

6. A camera system according to any one of claims 1 to 5, **characterised in that** the activation or parameterisation of driver-assisting functions of the motor vehicle is dependent on the presence of camera units in the coupling stations.

7. A camera system according to any one of claims 1 to 6, **characterised in that** image signals from the at least one camera unit can be wirelessly transmitted from the camera unit to an information processing unit of the motor vehicle.

8. A camera system according to any one of claims 1 to 7, **characterised in that** the coupling stations are connected, at least partially wirelessly or through lines, to an information processing unit of the motor vehicle and **in that** image signals from the at least one camera unit can be transmitted via a coupling station, to which the camera unit is coupled, to the information processing unit.

9. A camera system according to any one of claims 1 to 8, **characterised in that** the at least one camera unit can be used as a portable digital camera.

## Revendications

1. Système de caméras de véhicule automobile (1) comportant au moins une unité de caméra susceptible d'être reliée de manière amovible au véhicule et utilisée pour au moins une fonction du véhicule, d'assistance du conducteur et utilisant la caméra ainsi qu'un ensemble de postes de couplage (2a, 2b, 2c, 2d, 2e) solidaires du véhicule et pouvant recevoir sélectivement au moins une unité de caméra,
**caractérisé en ce que**
le système de caméras comporte des unités de caméra de types différents, et
le type de l'unité de caméra est reconnaissable par poste de couplage auquel on couple l'unité de caméra ou par une unité supérieure de traitement d'informations.

2. Système de caméras selon la revendication 1,
**caractérisé en ce que**
les postes de couplage sont répartis dans l'espace sur le véhicule.

3. Système de caméras selon la revendication 1 ou 2,
**caractérisé en ce que**
les postes de couplage sont associés au moins en partie chacun à au moins une fonction d'assistance du conducteur du véhicule.

4. Système de caméras selon les revendications 1 à 3,
**caractérisé en ce que**
le système de caméras comporte un ensemble d'unités de caméra.

5. Système de caméras selon la revendication 4,
**caractérisé en ce que**
les unités de caméra peuvent être associées au moins en partie respectivement à au moins une fonction d'assistance du conducteur du véhicule.

6. Système de caméras selon les revendications 1 à 5,
**caractérisé en ce que**
l'activation ou le paramétrage des fonctions d'assistance du conducteur du véhicule dépendent de la présence des unités de caméra dans les postes de couplage.

7. Système de caméras selon les revendications 1 à 6,
**caractérisé en ce que**
des signaux d'image d'au moins une unité de caméra, sont transmis par une liaison sans fil de l'unité de caméra vers une unité de traitement d'informations du véhicule.

8. Système de caméras selon les revendications 1 à 7,
**caractérisé en ce que**
les postes de couplage sont reliés au moins en partie par une liaison sans fil ou par des liaisons filaires à une unité de traitement d'informations du véhicule, et
les signaux d'image d'au moins une unité de caméra sont transmis par un poste de couplage auquel est couplée l'unité de caméra, vers l'unité de traitement d'informations.

9. Système de caméras selon les revendications 1 à 8,
**caractérisé en ce qu'**
au moins une unité de caméra est utilisable comme caméra numérique portative.
